# EUROPEAN PATENT SPECIFICATION

(11) **EP 3 463 008 B1**
(45) Date of publication and mention of the grant of the patent: **20.10.2021**
(21) Application number: 17735664.9
(22) Date of filing: 26.04.2017
(51) Int. Cl.: A47J 31/44, A47J 31/52, A47J 31/18

(54) **AUTOMATIC BEVERAGE MACHINE WITH POURING CONTROL SYSTEM**
GETRÄNKEAUTOMAT MIT GIESSSTEUERUNGSSYSTEM
DISTRIBUTEUR AUTOMATIQUE DE BOISSONS DOTÉ D'UN SYSTÈME DE RÉGLAGE DU VERSEMENT

(30) Priority: 24.05.2016 TR 201606892
(43) Date of publication of application: 10.04.2019
(73) Proprietor: Unal, Altug, 16140 Bursa (TR)
(72) Inventor: Unal, Altug, 16140 Bursa (TR)
(74) Representative: Yamankaradeniz, Kemal
(86) International application number: PCT/TR2017/050163
(87) International publication number: WO 2017/204761

(56) References cited:
- EP-A2- 2 218 378
- DE-U1-202009 008 447
- GR-B- 1 003 987
- US-A1- 2001 052 293

## Description

### THE RELATED ART

The invention particularly relates to an automatic beverage machine with pouring control system comprising a cooking container like a coffee pot and allowing preparation of sedimented beverages like Turkish coffee.

### THE PRIOR ART

An automatic beverage machine is a machine that allows cooking of coffee, sedimented products, sugar, and water mixture in a chamber like a coffee pot by heating up to a certain temperature and then serving into cups. The automatic beverage machine is generally used for preparing and serving coffee. Automatic beverage machines, in the most general sense, consist of an on/off button and a chamber (coffee pot) in which a sedimented product like coffee, sugar and water are mixed.

The automatic beverage machines used in the prior art allow serving of cooked coffee into cups by using a manifold-like intermediate transfer piece, in case of serving more than one cup. The manifold-like structure may be exposed to clogging etc. situations during flow of the beverage with sedimented structure. This may cause hygiene problems in case regular cleaning is not performed. At the same time, this situation makes it difficult to equally distribute the coffee and the coffee foam to be divided into more than one cup after cooking. Moreover, the use of an intermediate transfer piece makes the automatic cleaning operation harder. This is because, the number of pieces required to be cleaned also increases in addition to the cooking chamber. In addition, the distribution manifold is a piece that is hard to access and clean due to its structure.

Another unwanted situation that occurs with the use of manifold-like structure is the slow termination of the process due to free flow following the pouring operation. This situation may cause unwanted dripping or unnecessarily extend the process due to the difficulty of applying a tap-like structure on the manifold.

Some applications are found about the automatic beverage machine, in the national and international patent databases. Among these applications, the national application No. TR200502060 relates to a coffee machine that makes coffee in accordance with the traditional Turkish coffee cooking methods and serves the prepared coffee by pouring thereof into the desired number of cups. By taking water from its depot into the cooking container in accordance with the number of desired beverage cups, cooking the coffee, water, and sugar mixture according to traditional Turkish coffee cooking methods, and pouring thereof into beverage cups positioned on the automatic table found thereon, it provides Turkish coffee to the user with equal amount of foam. While obtaining coffee, traditional Turkish coffee foam and thickness is obtained by complete temperature control. Another national application with No. TR201203218 relates to a full automatic Turkish coffee cooking machine and a method of serving the cooked coffee into beverage cups, and it is characterized in that; it comprises the operation steps of: selecting the coffee ingredient and amount by using a keyboard, sending the required amount of water from the water depot, and the required amount of coffee and sugar from coffee and sugar dosing chambers into the cooking chamber, mixing the coffee ingredient in the cooking chamber by means of a mixer, cooking the coffee mixture by means of a heater, and after the cooking operation in the cooking temperature interval is completed, serving the coffee, from the chamber outlets into the beverage cups, in the amount adjusted with a coffee service piston.

GR1003987B document has the principle in which the cooking chamber is rotated after the coffee is ready and the prepared fluid will be poured into the cup. However as it can be seen from the figures, in GR1003987B document; the coffee prepared in the cooking chamber reaches to a pouring funnel, and to an outlet therefrom. In other words the coffee cooked in the cooking chamber is not directly poured into the cup; there are different aspects that play a role in the pouring process.

In the beverage preparation machine in EP2218378A2 document, there is a level adjustment mechanism that provides the cup to move upwards-downwards in which the beverage will be poured. By moving the cup upwardly and downwardly, a sensor controls the presence of the cup before making the coffee and it brings the cup closer to the coffee outlet nozzle. After this approximation process, the coffee preparation process begins and the service tray and the cup remain stable until the end of the pouring process. After the coffee is poured into the cup at the end of the process, the cup on the service tray descends then the service is made.

Among international applications, the application No. US2010218687 is an automatic beverage preparing and distribution machine consisting of a thermally separated twosection chamber and a hot water section preparing and distributing coffee, and a vapour feeding distribution unit.

As a result, the above said problems and the inadequacy of the prior art solutions about the subject have necessitated an improvement in the related technical field.

### PURPOSE OF THE INVENTION

The purpose of the invention is to solve the above said problems, eliminate all the drawbacks, and provide additional advantages to the structure.

The purpose of the invention is to perform equal distribution of cooked coffee and foam to the cups positioned at the front and back without the need for an additional distributing piece in automatic beverage machines. In order to achieve this purpose, a programmable, angle and position controlled pouring control system is developed. By means of this system, the pouring operation is performed with synchronized pouring movements in accordance with the determined number of cups with regard to the pouring angle of the cooking chamber and cup positions.

With the automatic beverage machine according to the invention, more than one cup can be served from a single cooking chamber without using any intermediate transfer piece. Since the coffee is served into the cup without being transferred to another part, the cleaning operation is only limited with the chamber. In this way, cleaning is made easier and the device becomes more suitable for automatic cleaning. By not using an intermediate transfer piece, the loss of foam from the coffee to be poured is reduced accordingly.

Another advantage of the invention is to be able to terminate the pouring operation quickly by changing the angle of the cooking container, and thus reduce situations like dripping and therefore reduce the serving time.

The structural and characteristic features, operating principle and advantages of the invention shall be understood better with the figures and the detailed description given below in reference to the figures. Therefore, the assessment should be made by taking into account said figures and detailed explanations.

### BRIEF DESCRIPTION OF THE FIGURES

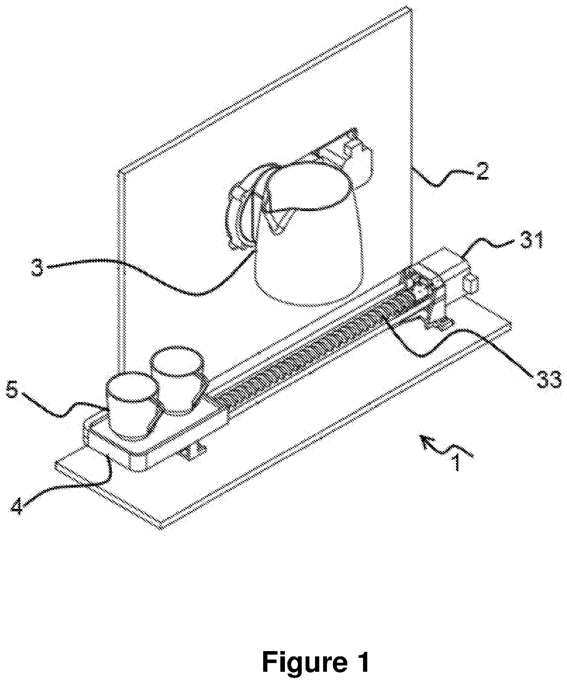

Figure 1 is a general view of the automatic beverage machine.

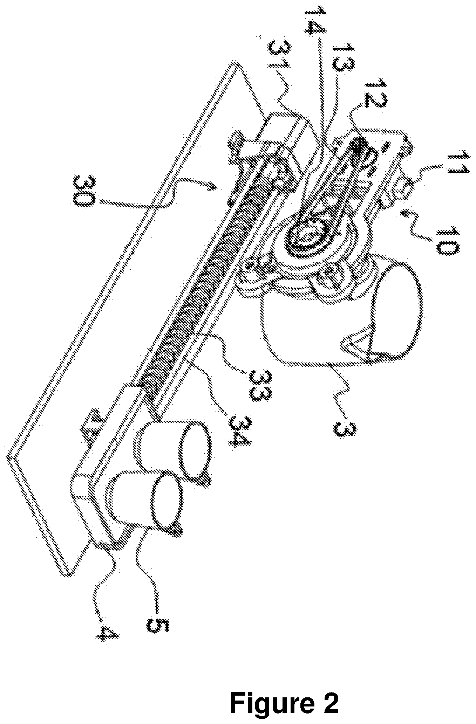

Figure 2 shows the chamber drive mechanism driving the chamber and the tray drive mechanism moving the cups.

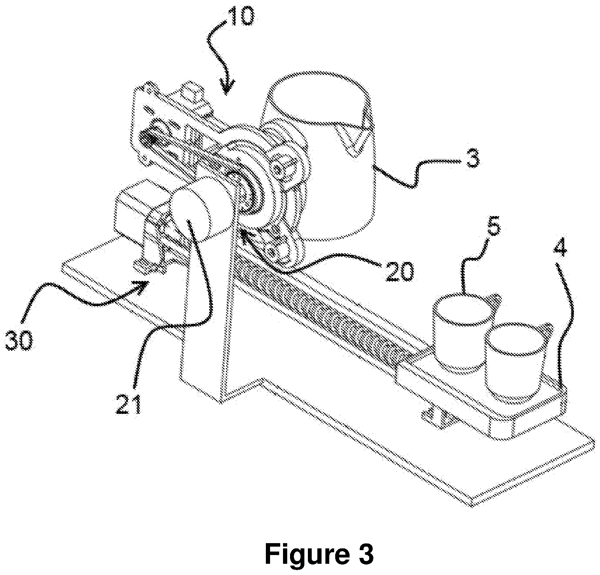

Figure 3 shows the drive mechanism and the angle control system of the chamber.

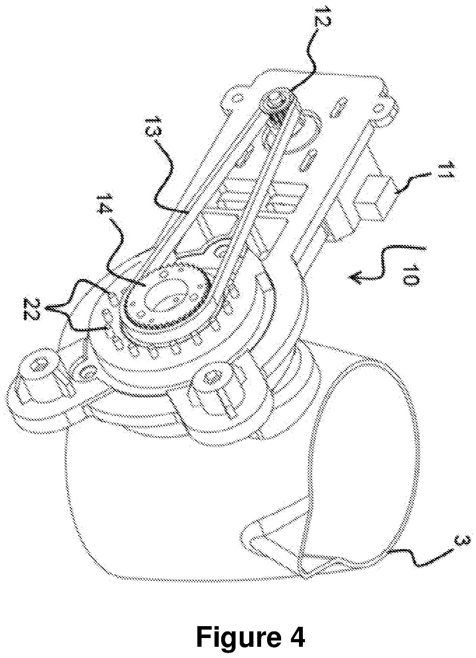

Figure 4 shows the alternative drive mechanism and angle sensor series for chamber control.

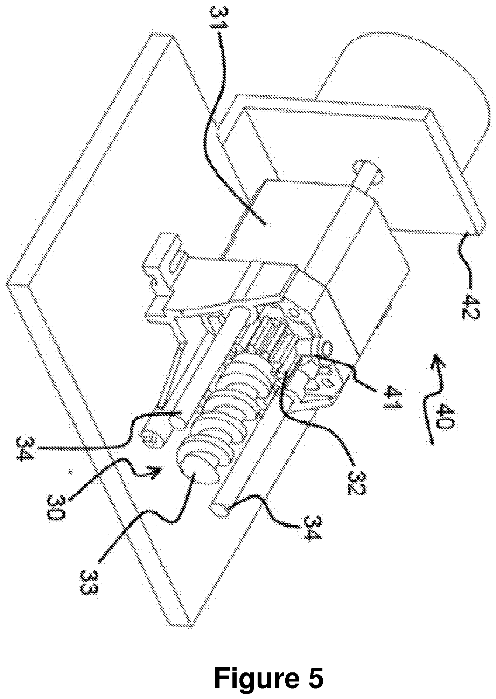

Figure 5 shows partially the tray control system and tray drive mechanism.

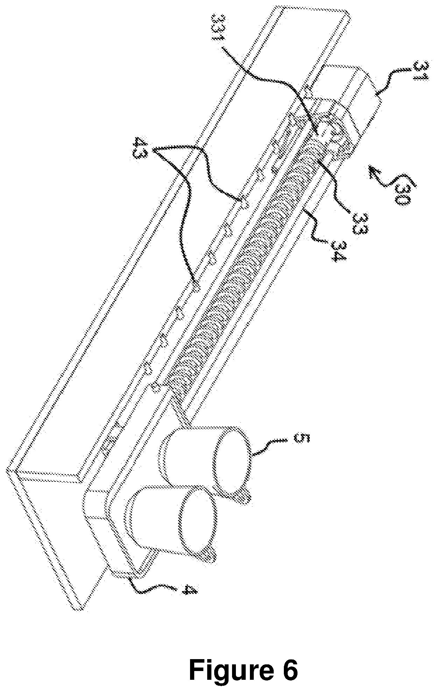

Figure 6 shows the alternative position sensor series and tray drive mechanism for tray control.
Figure 7 shows the movement of the chamber and its tray gradually while coffee is poured into a cup.
Figure 8 shows the movement of the chamber and the tray gradually while coffee is poured into two cups.
Figure 9 shows the angle of pouring of the chamber contents into a single cup, the time of pouring, and the position of the tray in a tabulated form.
Figure 10 shows the angle of pouring of the chamber contents into two cups, the time of pouring, and the position of the tray in a tabulated form.

### REFERENCE NUMBERS

- 1.: Automatic beverage machine
- 2.: Body
- 3.: Chamber (cooking container)
- 4.: Tray
- 5.: Cup (pouring container)
- 10.: Chamber drive mechanism
11. Angle control motor
12. Main gear
13. Transmission component
14. Transmission gear
- 20.: Chamber control system
21. Angle control encoder
22. Angle sensor
- 30.: Tray drive mechanism
31. Position control motor
32. Position control gear
33. Drive component
331. Connector
34. Guide shaft
- 40.: Tray control system
41. Gear position sensor
42. Tray position encoder
43. Tray position sensor

### DETAILED DESCRIPTION OF THE INVENTION

An automatic beverage machine (1) is a machine that performs robotized movements with angle and position control and allows the beverage to be served into cups (5) with the help of these movements. Said automatic beverage machine (1), in the most basic form, consists of a body (2), a chamber (3) positioned on the side surface of said body (2), a chamber drive mechanism (10), a chamber control system (20), a cup (5) into which the mixture found within said chamber (3) is poured, a tray (4) on which said cup (5) is positioned, a tray drive mechanism (30), and a tray control system (40).

Said chamber drive mechanism (10) drives said chamber (3) in an angle-controlled manner, and it consists of an angle control motor (11), a main gear (12), a transmission component (13), and a transmission gear (14). Said angle control motor (11) is positioned on the side surface of said body (2). Said angle control motor (11) allows said chamber (3) to rotate between certain angles. Said angle control motor (11) gives the torque it generates to the main gear (12). Said main gear (12) transmits this force and torque to the transmission gear (14) via the transmission component (13). Said transmission component (13) is a belt and it allows coupling of the main gear (12) and the transmission gear (14) to each other. Said transmission gear (14) reduces the torque and speed coming from the main gear (12) and transmits thereof to said chamber (3). This operation can also be performed by using a gear transfer mechanism or by directly providing the drive with a gear motor, instead of using a belt.

Said chamber control system (20) controls and commands the movement of said chamber drive mechanism (10), and it can operate as closed loop or open loop.

A typical example for an open loop use is the use of step motors. Although these kinds of motors are not that reliable in terms of positioning, they have lower cost and they provide a technically simpler and problem-free solution. In case of using such a motor, there would be no need for a sensor for angle control, and sensor can be used for zeroing, if required. As an alternative to these kinds of motors, self-closed loop motors comprising a sensor are also available.

A typical example for closed loop use is DC motor application, and in case of using such a motor, external angle sensors (22) or angle control encoder (21) can be used or an internal encoder type can be used for position tracking. Said angle sensors (22) are arranged circularly by 360° surrounding said transmission gear (14) at certain intervals and the circular angle control encoder (21) exhibits a similar behaviour. Said angle control encoder (21) and angle sensors (22) transmit the angular position and rotational speed data of said chamber (3) to said chamber control system (20). Said angle control motor (11) provides drive according to these data. Said tray drive mechanism (30) extends along the base area of said body (2) and adjusts the position of said tray (4) and the cups (5) found thereon according to said chamber (3). Said tray drive mechanism (30) is a worm gear mechanism, and moves said tray (4) back and forth by converting circular motion into linear motion. Said tray drive mechanism (30) consists of a position control motor (31) and a drive component (33) and guide shafts (34). Said position control motor (31) transfers the generated torque to said position drive component (33). Said drive component (33) is a threaded rod, and ensures conversion of the rotational motion generated by the position control motor (31) into linear motion via the connection nut found under the tray (4). Said guide shafts (34) are positioned reciprocally and in parallel to said drive component (33), and prevents said tray (4) from rotating during the back and forth movement thereof and ensures linear motion. Alternatively, the operation of converting rotational motion into linear motion can also be performed by a motor drive of a trigger belt from one end and stretching thereof from another end with an idle wheel and obtaining motion from an intermediate point. There are also various common structures in the literature for linear guiding.

Said tray control system (40) controls and commands the movement of said tray drive mechanism (30), and it can operate as closed loop or open loop.

A typical example for an open loop use is the use of step motors.

A typical example for closed loop use is DC motor application, and in case of using this type of motor, a gear position sensor (41) or a similarly operating tray position sensor (43) or also similarly operating tray position encoders (42) can be used for position tracking. Said gear position sensor (41) is formed of detectors such as a hall effect sensor. Said tray position sensor (43) is formed of hall effect sensor, reed relay etc. detectors and a magnet that can be positioned on a movable tray (4). Said tray position encoder (42) is in the group of ready-made commercial product that is used commonly in angle measurement and transfers the rotating angle and therefore the position of the motor to the control system.

Said angle sensors (22) transmit the angular position and rotational speed data of said chamber (3) to said chamber control system (20). Said angle control motor (11) provides drive according to these data.

Said gear position sensor (41), tray position encoder (42), and tray position sensor (43) measure the position and movement speed data of said tray (4) and transmits thereof to said tray position control system. Said position control motor (31) provides drive according to these data. The automatic beverage machine (1) can perform the operations of pouring into a single cup (5) and two cups (5). The operating principle of said automatic beverage machine (1) while pouring into cups (5) is such that, the pouring angle of said chamber (3) and the movement of said tray (4) are associated and change according to predetermined time intervals. This change is achieved by means of the chamber control system (20) and tray control system (40).

The operational angle values of said chamber (3) are found previously in the system, and when said chamber (3) reaches the target angle values, it is evaluated by the angle sensor (22) and angle control system and transferred to said angle control motor (11). Said angle control motor (11) drives said chamber (3) by means of the main gear (12), transmission component (13), and transmission gear (14) by also taking into account the time.

Similarly, the linear operational position values of said tray (4) are found in the system beforehand, and when said tray (4) reaches these position values, this angle value is detected by said gear position sensor (41) or tray position encoder (42) or tray position sensor (43). The detected position value is evaluated by the tray position control system and then transmitted to said position control motor (31). Said position control motor (31) drives said tray (4) linearly by means of the drive component (33) by also taking into account the time.

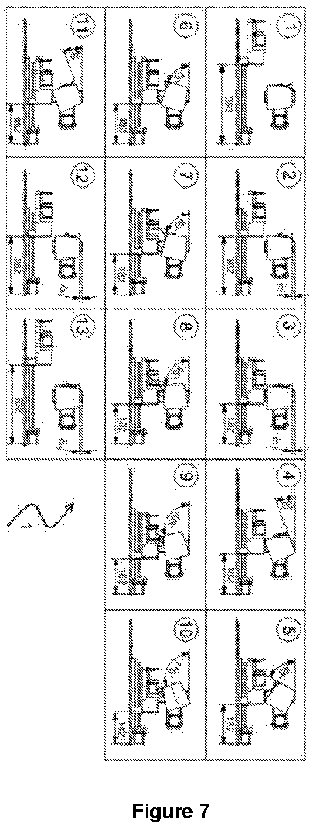

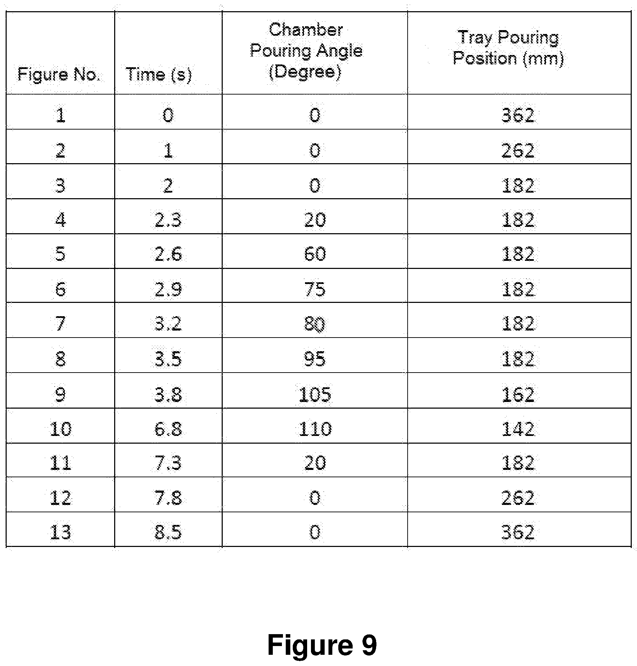

The operating principle of said automatic beverage machine (1) while conducting pouring operation into a single cup (5) (Figure 7) (Figure 9) is such that, while the reference position of said tray (4) in regard to the position control motor (31) is 362 mm, the cup is placed on the tray and the operation starts. The reference angle of said chamber (3) is 0°angle position. Said tray (4) reaches 262 mm position with the drive of said position control motor (31) in 1 second. At this moment, said chamber (3) is found in 0°angle position. Said tray (4) re aches 182 mm position with the drive of said position control motor (31) in 2 seconds. At this moment, said chamber (3) is also found in 0°angle position.

While said tray (4) is at the seconds 2.3, 2.6, 2.9, 3.2, and 3.5, it also remains steady at 182 mm position. At this moment, with the drive of said angle control motor (11), said chamber (3) reaches the angle positions of 20°, 60°, 75° 80°, 95°, respectively, at the above said time intervals. Said chamber (3) starts pouring operation at 80° angle position. While the angle position of said chamber (3) reaches 105° angle position at 3.8 seconds with the drive of said angle control motor (11), said tray (4) reaches 162 mm position with the drive of said position control motor (31). While the angle position of said chamber (3) reaches 110°angle position at 6.8 seconds with the drive of said angle control motor (11), said tray (4) reaches 142 mm position with the drive of said position control motor (31). When said chamber (3) is at 110° angle position, the pouring operation is completed and said chamber (3) starts to move to return to the reference position. While the angle position of said chamber (3) reaches 20° angle position at 7.3 seconds with the drive of said angle control motor (11), said tray (4) reaches 182 mm position with the drive of said position control motor (31). While the angle position of said chamber (3) reaches 0° angle position at 7.8 seconds with the drive of said angle control motor (11), said tray (4) reaches 262 mm position with the drive of said position control motor (31). When the angle position of said chamber (3) is constant 0° angle position at 8.5 seconds with the drive of said angle control motor (11), said tray (4) reaches 362 mm position with the drive of said position control motor (31). In this way, the tray (4) reaches service position and the operation is completed.

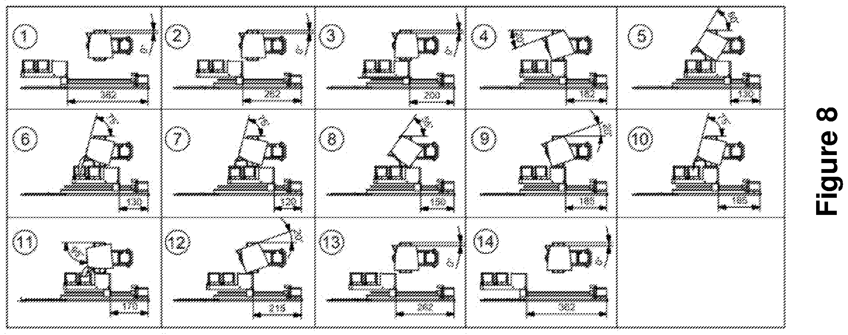

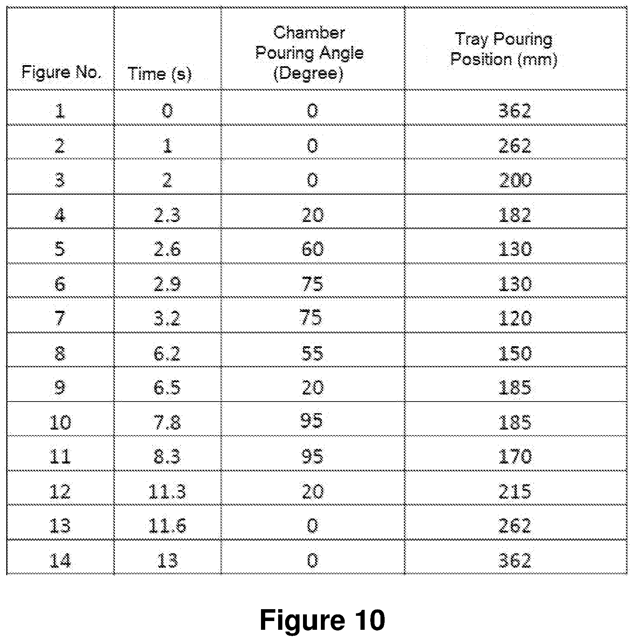

While said automatic beverage machine (1) conducts pouring operation into two cups (5) (Figure 8) (Figure 10), it starts the pouring operation from the farthest cup (5) from the chamber (3) and its operating principle is such that, while the reference position of said tray (4) in regard to the position control motor (31) is 362 mm, the cups are placed on the tray (4) and the operation starts. The reference angle of said chamber (3) is 0° angle position. Said tray (4) reaches 262 mm position with the drive of said position control motor (31) in 1 second. At this moment, said chamber (3) is found in 0° angle position. Said tray (4) reaches 200 mm position with the drive of said position control motor (31) in 2 seconds. At this moment, said chamber (3) is found in 0° angle position. Said tray (4) reaches 182 mm position with the drive of said position control motor (31) in 2.3 seconds. At this moment, said chamber (3) is found in 20° angle position. Said tray (4) reaches 130 mm position with the drive of said position control motor (31) in 2.6 seconds. At this moment, said chamber (3) is found in 60° angle position. While said tray (4) remains at this position until 2.9 seconds, said chamber (3) reaches 75° angle position. Said tray (4) reaches 120 mm position with the drive of said position control motor (31) in 3.2 seconds. At this moment, said chamber (3) is found in 75° angle position and pouring continues. Said tray (4) reaches 150 mm position with the drive of said position control motor (31) in 6.2 seconds. At this moment, said chamber (3) is found in 55° angle position. Filling of the 1st cup (5) is completed at this position, time, and angle. At 6.5 seconds, while said tray (4) reaches at 185 mm position with the drive of the position control motor (31), said chamber (3) reaches 20° angle position with the drive of the angle control motor (11). At 7.8 seconds, while said tray (4) remains steady at 185 mm position, said chamber (3) reaches 75° angle position. At 8.3 seconds, while said tray (4) reaches 170 mm position, said chamber (3) reaches 95° angle position. At 11.3 seconds, while said tray (4) reaches 215 mm position, said chamber (3) reaches 20° angle position. Filling of the 2nd cup is also completed at this position, time, and angle. At 11.6 seconds, while said tray (4) reaches 262 mm position, said chamber (3) reaches 0° angle position. At 13 seconds, while said tray (4) reaches 362 mm position, said chamber (3) remains steady at 0°ang le position. The pouring operation ends at this position, time, and angle, and then the coffee is ready to be served.

In order to perform the dividing operation successfully while pouring, factors such as having correct amount of liquid in the cooking container and having good parallel level of the device with the ground (water gauge) are of great importance. In order to ensure that the amount of liquid is at correct level, a flow meter can be used. In order to be able to tolerate possible errors with regard to the parallelism of the device with the ground, electronic sensors such as a sprit level can be used and correction factors can be applied through software. The angle control motor (11) and position control motor (31) used in the system are preferably step motor, servo motor, DC motor, and due to the natural structure of these kinds of motors, these are angle-controlled motors.

## Claims

1. An automatic beverage machine (1) comprising a body (2), a chamber (3) positioned on said body (2) and collecting a mixture of coffee or sedimented products with sugar and water, one or two cups (5) into which the mixture found in said chamber (3) is poured without using any intermediate transfer piece, and a tray (4) on which said cup (5) is positioned, comprising;
- a chamber drive mechanism (10) driving said chamber (3) in an angle-controlled manner,
- a chamber control system (20) controlling and commanding the movement of said chamber drive mechanism (10) and operating together with an angle control motor (11) that drives said chamber (3) according to the predetermined operational angle values,
- a tray drive mechanism (30) extending all along the bottom area of said body (2), adjusting the position of said tray (4) and the cups (5) found thereon according to said chamber (3), converting rotational motion into linear motion and thus moving said tray (4) back and forth, **characterized in that** it further comprises
- a tray control system (40) controlling and commanding the movement of said tray drive mechanism (30) and operating with a position control motor (31) that within a pre-determined time period enables proceeding by adjusting the location of the cup (5) during the angular movement of the chamber (3) that enables pouring action according to the predetermined operational position values defined to the system previously for being filled and according to the rotation angle values of the chamber (3) as a result of said angle control motor (11) drive.

2. The automatic beverage machine (1) according to Claim 1, **characterized in that** it comprises a step motor as said angle control motor (11).

3. The automatic beverage machine (1) according to Claim 1, **characterized in that** it comprises the use of a DC motor as said angle control motor (11) and it comprises angle control encoder (21) or angle sensors (22) that will act as an angle-control for said motor (11).

4. The automatic beverage machine (1) according to Claim 1, **characterized in that** it comprises a servo motor as said position control motor (31).

5. The automatic beverage machine (1) according to Claim 1, **characterized in that** it comprises a DC motor as said position control motor (31) and it comprises a gear position sensor (41) or tray position encoder (42) or a tray position sensor (43) to act as a position-control for said motor (31).

## Patentansprüche

1. Getränkeautomat (1), umfassend einen Körper (2), eine Kammer (3), die auf dem Körper (2) positioniert ist und eine Mischung aus Kaffee oder sedimentierten Produkten mit Zucker und Wasser sammelt, eine oder zwei Tassen (5), in welche die Mischung, die sich in der Kammer (3) befindet, gegossen wird, ohne ein Zwischenübertragungsstück zu verwenden, und ein Tablett (4), auf dem die Tasse (5) positioniert ist, umfassend:
- einen Kammerantriebsmechanismus (10), der die Kammer (3) auf eine winkelgesteuerte Weise antreibt,
- ein Kammersteuersystem (20), das die Bewegung des Kammerantriebsmechanismus (10) steuert und befiehlt und zusammen mit einem Winkelsteuermotor (11) arbeitet, der die Kammer (3) gemäß den vorbestimmten Betriebswinkelwerten antreibt,
- einen Tablettantriebsmechanismus (30), der sich entlang des gesamten Bodenbereichs des Körpers (2) erstreckt, die Position des Tabletts (4) und der Tassen (5), die sich darauf befinden, gemäß der Kammer (3) einstellt, Drehbewegung in lineare Bewegung umwandelt und dadurch das Tablett (4) hin- und herbewegt,
**dadurch gekennzeichnet, dass** er ferner Folgendes umfasst:
- ein Tablettsteuersystem (40), das die Bewegung des Tablettantriebsmechanismus (30) steuert und befiehlt und mit einem Positionssteuermotor (31) arbeitet, der innerhalb einer vorbestimmten Zeitdauer das Fortfahren durch Einstellen der Position der Tasse (5) während der Winkelbewegung der Kammer (3) ermöglicht, die einen Ausgießvorgang gemäß den vorbestimmten Betriebspositionswerten, die für das System vor dem Befüllen definiert wurden, und gemäß den Drehwinkelwerten der Kammer (3) als Ergebnis des Antriebs des Winkelsteuermotors (11) ermöglicht.

2. Getränkeautomat (1) nach Anspruch 1, **dadurch gekennzeichnet, dass** er einen Schrittmotor als Winkelsteuermotor (11) umfasst.

3. Getränkeautomat (1) nach Anspruch 1, **dadurch gekennzeichnet, dass** er die Verwendung eines Gleichstrommotors als Winkelsteuermotor (11) umfasst und er einen Winkelsteuercodierer (21) oder Winkelsensoren (22) umfasst, die als Winkelsteuerung für den Motor (11) wirken.

4. Getränkeautomat (1) nach Anspruch 1, **dadurch gekennzeichnet, dass** er einen Servomotor als Positionssteuermotor (31) umfasst.

5. Getränkeautomat (1) nach Anspruch 1, **dadurch gekennzeichnet, dass** er einen Gleichstrommotor als Positionssteuermotor (31) umfasst und er einen Zahnradpositionssensor (41) oder einen Tablettpositionscodierer (42) oder einen Tablettpositionssensor (43) umfasst, um als Positionssteuerung für den Motor (31) zu wirken.

## Revendications

1. Distributeur automatique de boissons (1) comprenant un corps (2), une chambre (3) positionnée sur ledit corps (2) et recueillant un mélange de café ou de produits sédimentés avec du sucre et de l'eau, une ou deux tasses (5) dans lesquelles le mélange qui se trouve dans ladite chambre (3) est versé sans utiliser un élément de transfert intermédiaire, et un plateau (4) sur lequel ladite tasse (5) est positionnée, comprenant ;
- un mécanisme d'entraînement de chambre (10) entraînant ladite chambre (3) d'une manière régulée en angle,
- un système de régulation de chambre (20) régulant et commandant le mouvement dudit mécanisme d'entraînement de chambre (10) et fonctionnant conjointement avec un moteur de régulation d'angle (11) qui entraîne ladite chambre (3) selon les valeurs d'angle de fonctionnelles prédéfinies,
- un mécanisme d'entraînement de plateau (30) s'étendant tout le long de la zone inférieure dudit corps (2), réglant la position dudit plateau (4) et des tasses (5) qui se trouvent sur celui-ci selon ladite chambre (3), convertissant le mouvement de rotation en mouvement linéaire et déplaçant ainsi ledit plateau (4) d'avant en arrière, **caractérisée en ce qu'**il comprend en outre
- un système de régulation de plateau (40) régulant et commandant le mouvement dudit mécanisme d'entraînement de plateau (30) et fonctionnant avec un moteur de commande de position (31) qui, dans les limites d'une période de temps prédéfinie, permet de procéder en réglant l'emplacement de la tasse (5) durant le mouvement angulaire de la chambre (3) qui permet l'action de versement selon les valeurs de position fonctionnelles prédéfinies définies précédemment pour le système en vue du remplissage et selon les valeurs d'angle de rotation de la chambre (3) en raison dudit entraînement de moteur de régulation d'angle (11).

2. Distributeur automatique de boissons (1) selon la revendication 1, **caractérisé en ce qu'**il comprend un moteur pas à pas en tant que moteur de régulation d'angle (11).

3. Distributeur automatique de boissons (1) selon la revendication 1, **caractérisée en ce qu'**il comprend l'utilisation d'un moteur CC en tant que moteur de régulation d'angle (11) et qu'il comprend un codeur de régulation d'angle (21) ou des capteurs d'angle (22) qui agiront en tant que régulateur d'angle pour ledit moteur (11).

4. Distributeur automatique de boissons (1) selon la revendication 1, **caractérisée en ce qu'**il comprend un servomoteur en tant que moteur de régulation de position (31).

5. Distributeur automatique de boissons (1) selon la revendication 1, **caractérisé en ce qu'**il comprend un moteur CC en tant que moteur de régulation de position
(31) et qu'il comprend un capteur de position d'engrenage (41) ou un codeur de position de plateau (42) ou un capteur de position de plateau (43) pour agir en tant que régulateur de position pour ledit moteur (31).
